# EUROPÄISCHE PATENTANMELDUNG

(11) **EP 0 695 882 A2**
(43) Veröffentlichungstag der Anmeldung: **07.02.1996**
(21) Anmeldenummer: 95109036.4
(22) Anmeldetag: 12.06.1995
(51) Int. Cl.: F16B 21/16, F16B 5/06

(54) **Befestigungselement**

(30) Priorität: 04.07.1994 DE 4423382
(71) Anmelder: Bosch-Siemens Hausgeräte GmbH, D-81669 München (DE)
(72) Erfinder: Fauser, Christoph, Dipl.-Ing. (FH), D-89075 Ulm (DE); Reichel, Werner, Dipl.-Ing. (FH), D-89522 Oggenhausen (DE); Mättig, Peter, D-89537 Giengen (DE)

(57) **Zusammenfassung**

Bei einem Befestigungselement mit einem Anschlag und einem daran angeordneten Zapfen zur Verbindung schichtähnlich nacheinander angeordneter Verbindungspartner, wobei der Zapfen die Verbindungspartner durchdringt und mit Rastmitteln versehen ist, welche im Verbindungszustand eine Rastverbindung mit den Verbindungspartnern zu bilden vermögen, ist der Zapfen aus zueinander hinsichtlich ihrer Querschnittsfläche abgestuften, in verjüngender Art aneinander anschließenden Längenabschnitten gebildet, welche in ihrer Anzahl auf die Zahl der Verbindungspartner abgestimmt sind und von denen wenigstens eine ausgewählte Anzahl mit Rastmitteln versehen sind, aufgrund welcher die zu befestigenden Verbindungspartner auf den jeweilig zugeordneten Längenabschnitt fixiert sind.

## Beschreibung

Die Erfindung betrifft ein Befestigungselement mit einem Anschlag und einem daran angeordneten Zapfen zur Verbindung schichtähnlich nacheinander angeordneter Verbindungspartner, wobei der Zapfen die Verbindungspartner durchdringt und mit Rastmitteln versehen ist, welche im Verbindungszustand eine Rastverbindung mit den Verbindungspartnern zu bilden vermögen.

Befestigungselemente gemäß dem Oberbegriff des Anspruches 1 sind aus der Automobilindustrie bekannt, wo sie zur lösbaren Befestigung von Verkleidungsteilen, insb. im Fahrgastraum von Kraftfahrzeugen, eingesetzt sind. Die hierbei zum Einsatz kommenden Befestigungselemente sind dabei üblicherweise nietähnlich ausgebildet, wobei der Schaft über seine gesamte Länge eine nahzu gleichgroße Querschnittsfläche aufweist und nahe seinem freien, vom Kopf abgewandten Ende mit gegenüber der Mantelfläche des Schaftes vorstehenden und zum Kopf hin keilförmig ansteigenden federnden Rastnasen versehen ist. Zum Zwecke der Befestigung der Verkleidungsteile an den dafür vorgesehenen Stellen der Fahrzeugkarosserie durchdringt der Schaft des Befestigungselements zuerst das Verkleidungsteil und im Anschluß daran den zu verkleidenden, als Träger für das Verkleidungsteil dienenden Abschnitt der Fahrzeugkarosserie, wobei die Halterung des Verkleidungsteiles durch das Verrasten der federnden Rastnasen an der Fahrzeugkarosserie bewirkt ist. Eine über die reine Befestigung hinausgehende Funktion weisen derartige Befestigungselement nicht auf.

Der Erfindung liegt die Aufgabe zugrunde, ein Befestigungselement vorzuschlagen, das bei einen einfachen konstruktiven Aufbau eine wesentliche Erhöhung seines Gebrauchsnutzens aufweist.

Diese Aufgabe wird gemäß der Erfindung dadurch gelöst, daß der Zapfen aus zueinander hinsichtlich ihrer Querschnittfläche abgestuften, in verjüngender Art aneinander anschließenden Längenabschnitten gebildet ist, welche in ihrer Anzahl auf die Zahl der Verbindungspartner abgestimmt sind und von denen wenigstens eine ausgewählte Anzahl mit Rastmitteln versehen sind, aufgrund welcher die zu befestigenden Verbindungspartner auf dem jeweilig zugeordneten Längenabschnitt fixiert sind.

Die erfindungsgemäße Lösung weist neben dem Vorteil, daß jeder der Verbindungspartner stabil für sich befestigt ist, noch den Vorzug auf, daß auf einfache Weise eine Kodierung für die Montagereihenfolge der einzelnen Verbindungspartner geschaffen ist. Ferner erlaubt die erfindungsgemäße Lösung die Demontage eines einzelnen Verbindungspartners, ohne dabei zwangsläufig die Auflösung der Gesamtverbindung zur Folge zu haben.

Nach einer weiteren bevorzugten Ausführungsform des Gegenstandes der Erfindung ist vorgesehen, daß die Teile in ihrer Verrastposition auf dem jeweiligen Längenabschnitt des Zapfens durch die Rastmittel einerseits und durch die Abstufung der Querschnittsfläche zwischen einzelnen Längenabschnitten gebildeten anschlagartigen Widerlager andererseits axial gehalten sind.

Eine derartige Lösung zeichnet sich vor allen dadurch aus, daß die einzelnen Verbindungspartner in definierten Abständen zueinander angeordnet und in mit engen Toleranzgrenzen beaufschlagten Endpositionen bringbar und in diesen sicher fixiert sind.

Gemäß einer nächsten bevorzugten Ausführungsform des Gegenstandes der Erfindung ist vorgesehen, daß durch die Längenabschnitte des Zapfens verlaufende fiktive Achsen zueinander fluchtend ausgerichtet sind.

Durch eine derartige Lösung ist auf einfache Weise sichergestellt, daß die jeweiligen Verbindungspartner mehrfach und somit besonders sicher an den ihnen zugeordneten anschlagartigen Widerlagern abgestützt sind. Außerdem ergibt sich dadurch eine besonders einfache Montage der zu befestigenden Teile.

Entsprechend einer weiteren bevorzugten Ausführungsform des Gegenstandes der Erfindung ist vorgesehen, daß eine vorbestimmte Anzahl der einzelnen Längenabschnitte des Zapfens durch hohlkörperartig angeordnete Wandungssegmente gebildet sind, welche in Art einer Zunge um ihr freies Ende elastisch verschwenkbar und an ihrem freien Ende mit als Rasthaken dienenden Ansätzen versehen sind..

Eine solche Lösung ermöglicht eine besonders genaue Abstimmung und Anpassung der Zapfenaußenkontur an die von den jeweiligen Längenabschnitten des Zapfens durchdrungene Aufnahme an den Verbindungsteilen, da die den jeweiligen Längenabschnitt bildenden einzelnen Wandungssegmente beim Verrastvorgang aufeinanderzu bewegt werden und nach Vollzug des Verrastvorganges elastisch in ihre die Außenkontur des Zapfens beschreibende Ausgangslage zurückverschwenken. Ferner dienen die keilförmig an den freien Enden der Längenabschnitte angeordneten Rasthaken als Fügehilfe für die Verbindungspartner bei deren Montage.

Nach einer nächsten vorteilhaften Ausgestaltung des Gegenstandes der Erfindung ist vorgesehen, daß jeweils zwei einander gegenüberliegende Wandungssegmente des Hohlkörpers zur Bildung der Längenabschnitte des Zapfens vorgesehen sind, wobei die Wandungssegmente eines Längenabschnitts zum jeweilig benachbarten Längenabschnitt um einen Zwischenwinkel verdreht angeordnet sind.

Einerseits wird durch eine derartige Lösung sowohl die Montage als auch die Demontage der Verbindungspartner deutlich vereinfacht und andererseits ist bei einem in Spritzgußtechnik gefertigten Befestigungselement aufgrund der günstigen Entformungsmöglichkeiten der Werkzeugaufwand wesentlich erniedrigt.

Besonders einfach herstellbar ist ein Befestigungselement. wenn nach einer weiteren vorteilhaften Ausgestaltung des Gegenstandes der Erfindung vorgesehen ist, daß die Längenabschnitte eine Querschnittsfläche gleicher Geometrie aufweisen.

Eine besonders günstige Zentrier- und Fixierwirkung bei der Montage der Verbindungspartner wird erreicht, wenn nach einer nächsten vorteilhaften Ausgestaltung des Gegenstandes der Erfindung vorgesehen ist, daß die Querschnittsfläche der Längenabschnitte kreisförmig ausgebildet ist.

Besonders zweckmäßig gestaltet ist ein Befestigungselement, wenn nach einer weiteren bevorzugten Ausführungsform des Gegenstandes der Erfindung vorgesehen ist, daß der Längenabschnitt des Zapfens mit der größten Querschnittsfläche an seinem freien Ende mit einem Anschlagbund versehen ist.

Gemäß einer letzten bevorzugten Ausführungsform des Gegenstandes der Erfindung ist vorgesehen, daß der Längenabschnitt mit der größten Querschnittsfläche zur Halterung des Befestigungselements an einem Träger dient.

Neben einer besonders günstigen Krafteinleitung des belasteten Befestigungselements auf einen Träger weist eine solche Lösung noch den Vorzug einer besonders stabilen Halterung des Befestigungselements auf.

Die Erfindung ist in der nachfolgenden Beschreibung am Beispiel eines in der Zeichnung vereinfacht dargestellten Haushaltsgefrierschrankes erläutert. Es zeigen:
- Fig. 1: einen Umluftgefrierschrank mit an der Rückwand seines Innenraumes angeordneter, mit Befestigungselementen gehalterter Kühleinheit im Vertikalschnitt,
- Fig. 2: in einem gegenüber Fig. 1 vergrößerten Ausschnitt die Kühleinheit im Bereich eines zu ihrer Halterung an der Rückwand dienenden, etwa in natürlichem Maßstab dargestellten Befestigungselementes in Seitenansicht und
- Fig. 3: das Befestigungselement in Schrägansicht von der Seite in vergrößerten Maßstab.

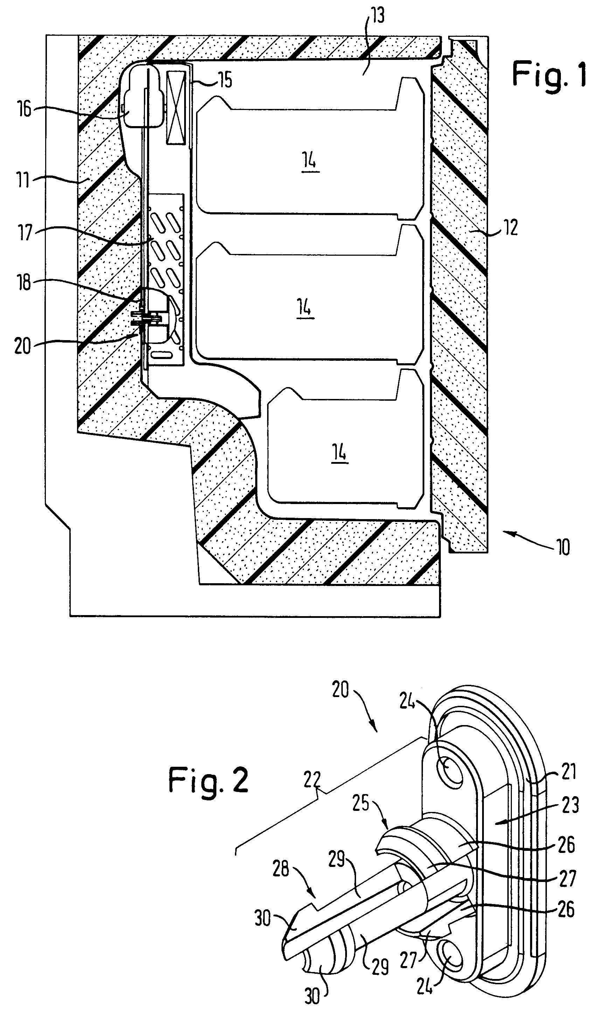

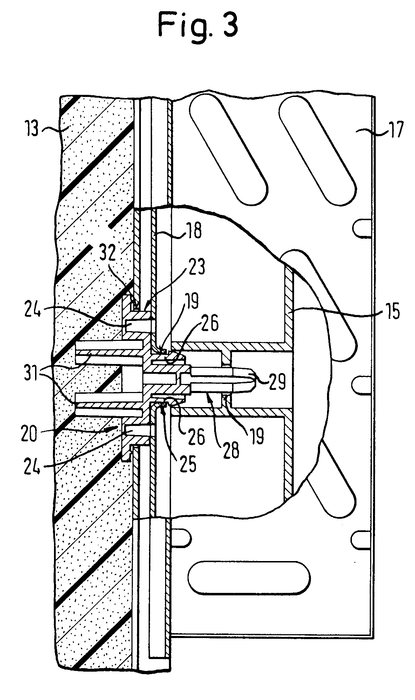

Gemäß Fig. 1 ist ein Umluftgefrierschrank 10 gezeigt, dessen wärmeisolierendes Gehäuse 11 zusammen mit einer ebenso wärmeisolierenden Tür 12 einen Gefrierraum 13 umschließt. Dieser ist zur Wärmeisolation des Gehäuses 11 hin mit einem durch spanlose Formgebung erzeugten Kunststoffkühlgutbehälter 14 abgeschirmt und mit drei in etwa gleichmäßigen Abständen übereinander angeordneten, nicht näher bezeichneten schubladenartigen Behältern zur Aufnahme von Kühlgut ausgestattet. Unmittelbar hinter den schubladenartigen Behältern, mit geringem Abstand dazu ist eine Luftleitvorrichtung 15 vorgesehen, welche mit Abstand zu dem die Rückwand des Gefrierraumes 13 bildenden Abschnitt des Kühlgutbehälters 14 einen Zwischenraum zusammen mit diesem erzeugend, angeordnet ist. Innerhalb dieses Zwischenraumes, von der Luftleitvorrichtung 15 im wesentlichen abgedeckt, ist eine zu Kühlung des Gefrierraumes 13 dienende Kühleinrichtung angeordnet, welche sich im wesentlichen aus einem unterhalb der Decke des Gefrierraumes 13 angeordneten Ventilator 16 und einem mit Abstand unter dessen Einbaulage vorgesehenen, als Lamellenverdampfer ausgebildeten Verdampfers 17 zusammensetzt. Dieser ist von einer als Trägerblech ausgebildeten Trageinrichtung 18 getragen, welche wie die Luftleitvorrichtung 15 mit Aufnahmen 19 versehen ist, welche mit einem an der Rückwand des Gefrierraumes 13 befestigten und zur Halterung der Luftvorrichtung 15 und der Trageinrichtung 18 dienenden Befestigungselementen 20 auf eine weiter unten genauer erläuterte Weise zusammenwirkt (siehe hierzu auch Fig. 3).

Wie insb. aus Fig. 2 hervorgeht, weist das Befestigungselement 20 eine bundartige Anschlagfläche 21 auf, welches als Oval mit zwei einander zugekehrten Halbkreisen und einem dazwischenliegenden Rechteck gebildet ist. An die bundartige Anschlagfläche 21 schließt sich ein Zapfen 22 an, welcher Längenabschnitte aufweist deren geometrische Grundkörper hinsichtlich ihrer Querschnittsfläche abgestuft ausgebildet sind, wobei ein erster, hinsichtlich seiner Länge am kürzesten bemessener Längenabschnitt 23 die größte Querschnittfläche aufweist die ebenso wie die bundartige Anschlagfläche 21 mit einer ovalen Kontur versehen ist. Der Längenabschnitt 23 ist unmittelbar benachbart zu der bundartigen Anschlagfläche 21 angeordnet und ist jeweils mit etwa in Mittelpunkt der einander zugewandten Halbkreise des Ovals angeordneten Aufnahmebohrungen 24 ausgestattet, welche hinsichtlich ihrer Bohrungslänge derart ausgelegt sind, daß sie in die bundartige Anschlagfläche 21 übergehen. An den Längenabschnitt 23 schließt sich ein Längenabschnitt 25 an, welcher aus einander gegenüberliegenden, als elastische Zungen 26 ausgebildeten Wandungssegmenten eines geraden Kreishohlzylidners gebildet sind, dessen Querschnittfläche bezüglich der Querschnittfläche des Längenabschnitts 23 deutlich verringert ist. Die als elastischen Zungen 26 ausgebildeten Wandungssegmente des Kreishohlzylinders, welche den Qurschnitt eines Kreisringsektors aufweisen, sind mit ihren gekrümmten Flächen zu den gekrümmten Flächen des Ovals des Längenabschnitts 23 ausgerichtet, wobei die Bogenlänge der Kreisringsektoren auf die Breite des rechteckigen Abschnitts des Ovals des Längenabschnitts 23 abgestimmt ist. Jede der elastischen Zungen 26 ist an ihrem freien, vom Längenabschnitt 23 abgewandten Ende mit einem als Rasthaken 27 dienenden Ansatz ausgestattet, welcher eine zum Längenabschnitt 23 hin keilförmig ansteigende, als Zentrierfläche dienende Schräge aufweist. Dem Längenabschnitt 25 ist ein Längenabschnitt 26 vorgeschaltet und welcher im Vergleich zu den Längenabschnitten 23 und 25 die geringste Querschnittsfläche aufweist und welcher im wesentlichen, ebenso wie der Längenabschnitt 25, aus Wandungssegmenten eines geraden Kreishohlzylinders gebildet ist, die als elastische Zungen 29 dienen. Die den Längenabschnitt 28 bildenden Wandsegmente des Kreishohlzylinders sind dabei zu denjenigen des Längenabschnitts 25 um 90° gedreht angeordnet, wodurch die Bewegungsfreiheit der elastischen Zungen 29 des Längenabschnitts 28 deutlich verbessert ist. Das freie vom Längenabschnitt 25 abgewandte Ende der elastischen Zungen 29 ist wie das der elastischen Zungen 26 mit einem als Rasthaken 30 dienenden Ansatz versehen, welcher eine von seinem freien Ende ausgehende, zum Längenabschnitt 25 hin keilförmig ansteigende als Schräge ausgebildete Zentrierfläche aufweist. Die Längenabschnitte 23, 25 und 28 sind zueinander derart ausgerichtet, daß durch sie verlaufende fiktive Längsachsen, im Falle der Längenabschnitte 25 und 28, die durch einen geraden Kreishohlzylinder verlaufende Längsachse und im Falle des Längenabschnitts 23 dessen Längsachse fluchtend auf einer gemeinsamen Längsachgse liegen.

Wie insb. aus Fig. 3 hervorgeht, ist das Befestigungselement 20 auf seiner dem Zapfen 22 gegenüberliegenden Seite mit im Querschnitt kreuzförmigen Verankerungselementen 31 versehen, welche durch ihr Eingreifen in die Wärmeisolation des Gehäuses 11 eine zusätzliche Stabilisierung des Befestigungselementes 20 zur Folge hat, wenn dieses wie im vorliegenden Fall, an einem relativ dünnwandigen Kühlgutbehälter 14 eines Haushaltsgefrierschrankes 10 befestigt ist. Zum Zwecke seiner Befestigung am Kühlgutbehälter 14 sitzt das Befestigungselement 20 mit seinem Längenabschnitt 23 in einer in den Kühlgutbehälter 14 eingebrachte, an die ovale Außenkontur des Längenabschnitts 23 angepaßte Öffnung 32 und liegt mit seiner bundartigen Anschlagfläche 21 gegen die vom Gefrierraum 13 abgewandte Außenseite des Kühlgutbehälters 14 in einem Schweißverbund mit dieser, an.

Zur Befestigung und Fixierung der den Verdampfer 17 tragenden Trageinrichtung 18 und der Luftleitvorrichtung 15 an der Rückwand des Gefrierraumes 13 werden diese schichtähnlich nacheinander angeordnet, wobei die Trageinrichtung 18 zum Zwecke ihrer Befestigung am Befestigungselement 20 der Luftleitvorrichtung 15 vorauseilt. Während des Befestigungsvorganges erfährt sowohl die Trageinrichtung 18 als auch die Luftleitvorrichtung 15 eine durch das Zusammenwirken ihrer Aufnahmen 19 mit den keilförmig angestellten Zentrierflächen an den freien Enden der elastisch federnden Zungen 26 und 29 eine gewisse bedingte Vorzentrierung zur Gefrierraumrückwand, wobei während des Durchdringungsvorganges der Aufnahmen 19 durch die Längenabschnitte 25 und 28 deren sie bildende federnde Zungen 26 und 29 elastisch zu einer nicht dargestellten Zapfenachse hin ausgelenkt werden. Nachdem die Trageinrichtung 18 und die Luftleitvorrichtung 15 ihre endgültige Befestigungs- und Fixierlage erreicht haben, verschwenken die elastischen Zungen 26 und 29 federnd aus ihrer zurückgedrängten Lage zurück in ihre Ruhelage, wobei dann die Rasthaken 27 und 30 zur axialen Fixierung der Trageinrichtung 18 und der Luftleitvorrichtung 15 beitragen.

Im vorliegenden Ausführungsbeispiel wird die Trageinrichtung 18 auf dem Längenabschnitt 25 durch die Rasthaken 26 einerseits und durch die Abstufung der Querschnittsfläche zwischen dem Längenabschnitt 23 und dem Längenabschnitt 25 gebildeten anschlagartigen Widerlager andererseits axial fixiert und gehalten. Die axiale Fixierung der Luftleitvorrichtung 15 ist gemäß dem vorliegenden Ausführungsbeispiel alternativ zur Fixierung der Trageinrichtung 18 ausgebildet, wobei die zur Halterung der Luftleitvorrichtung 15 dienenden Aufnahmen 19 jeweils innerhalb eines der Trageinrichtung 18 zugewandten tubusartigen Fortsatzes an der Luftleitvorrichung 15 angeordnet sind.

Wie auch im Falle der Trageinrichtung 18 bewirken die Rasthaken 29 eine axiale Sicherung der Aufnahme 19 an der Luftleitvorrichtung 15 auf den Längenabschnitt 28 gegen Abziehen von diesem. In Gegensatz zur axialen Fixierung der Trageinrichtung 18 ist jedoch der Aufschiebeweg der Aufnahme 19 nicht durch die Querschnittsflächen-Abstufung zwischen den Längsabschnitt 25 und 28, sondern durch das Anschlagen des freien Endes des tubusartigen Fortsatzes an der Trageinrichtung 18 begrenzt. Hierbei übergreift dieser mit seinem Innendurchmesser die ihm zugewandten Abschnitte der Rasthaken 26 zum Zwecke der Zentrierung der Luftleitvorrichtung in ihrer Einbaulage und schlägt zur Begrenzung des Aufschiebeweges an der durchzugartigen Aufnahme 19 der Trageirrichtung 18 an, wobei sich das freie Ende des tubusartigen Fortsatzes bei Einleitung eines Kippmomentes auf die Luftleitvorrichtung 15 abstützt. Für den Fall, daß bei einer gegebenenfalls notwendig werdenden Demontage der Trageinrichtung 18 einer oder beide Rasthaken 26 derart beschädigt werden, daß ihre Funktion nicht mehr gewährleistet ist, kann die Trageinrichtung 18 bei einer anschließenden Montage mittels nicht dargestellter Schrauben, welche in die vorgeformten Aufnahmebohrungen 24 eingedreht werden, erneut am Befestigungselement 20 fixiert werden.

Entgegen dem vorliegenden Ausführungsbeispiel wäre es auch denkbar, alle Längenabschnitte des Zapfens mit Rastmittel zu versehen. Auch ist es vorstellbar, das Befestigungselement als nicht ortsfest fixiertes loses Steckelement zum Einsatz zu bringen.

## Patentansprüche

1. Befestigungselement mit einen Anschlag und einem daran angeordneten Zapfen zur Verbindung schichtähnlich nacheinander angeordneter Teile, wobei der Zapfen die Teile durchdringt und mit Rastmittel versehen ist, welche im Verbindungszustand eine Rastverbindung mit den Teilen zu bilden vermögen, **dadurch gekennzeichnet,** daß der Zapfen (22) aus zueinander hinsichtlich ihrer Querschnittsfläche abgestuften, in verjüngender Art aneinander anschließenden Längenabschnitte (23, 25, 28) gebildet ist, welche in ihrer Anzahl auf die Zahl der Teile (15, 18) abgestimmt sind und von denen wenigstens eine vorbestimmte Anzahl mit Rastmitteln (26, 29) versehen sind, aufgrund welcher die zu befestigenden Teile (15, 18) auf den jeweils zugeordneten Längenabschnitt (25, 28) fixiert sind.

2. Befestigungselement nach Anspruch 1, dadurch gekennzeichnet, daß die Teile (15, 18) in ihrer Verrastposition auf dem jeweiligen Längenabschnitt (25, 28) des Zapfens (22) durch die Fastmittel (26, 29) einerseits und durch die Abstufung der Querschnittsfläche zwischen den einzelnen Längenabschnitten (25, 28) gebildeten anschlagartigen Widerlager andererseits axial gehalten sind.

3. Befestigungselement nach Anspruch 1 oder 2, dadurch gekennzeichnet, daß durch die einzelnen Längenabschnitte (23, 25, 28) des Zapfens (22) verlaufende fiktive Achsen zueinander fluchtend ausgerichtet sind.

4. Befestigungselement nach einem der Ansprüche 1 bis 3, dadurch gekennzeichnet, daß eine vorbestimmte Anzahl der einzelnen Längenabschnitte (25, 28) des Zapfens (22) durch in Art eines Hohlkörpers angeordnet als Zungen (26, 29) dienende Wandsegmente gebildet sind, welche um ihr freies Ende elastisch verschwenkbar und an ihrem freien Ende mit als Rasthaken (27, 30) dienenden Ansätzen versehen sind.

5. Befestigungselement nach Anspruch 4, dadurch gekennzeichnet, daß jeweils zwei einander gegenüberliegende Wandungssegmente (26, 29) des Hohlkörpers zur Bildung der Längenabschnitte (25, 28) des Zapfens (22) vorgesehen sind, wobei die Wandungssegmente (26) eines Längenabschnitts (25) zu denen des jeweilig benachbarten Längenabschnitts (29) um einen Zwischenwinkel verdreht angeordnet sind.

6. Befestigungselement nach einem der Ansprüche 1 bis 5, dadurch gekennzeichnet, daß eine überwiegende Anzahl der Längenabschnitte (25, 28) eine Querschnittsfläche gleicher Geometrie aufweisen.

7. Befestigungselement nach Anspruch 6, dadurch gekennzeichnet, daß die Querschnittsfläche kreisförmig ausgebildet ist.

8. Befestigungselement nach einem der Ansprüche 1 bis 7, dadurch gekennzeichnet, daß der Längenabschnitt (23) des Zapfens (22) mit der größten Querschnittsfläche an seinem freien Ende mit einem Anschlagverbund (21) versehen ist.

9. Befestigungselement nach einem der Ansprüche 1 bis 8, dadurch gekennzeichnet, daß der Längenabschnitt (23) mit der größten Querschnittsfläche zur Halterung des Befestigungselements (22) an einem Träger (14) dient.
